# NEUE EUROPÄISCHE PATENTSCHRIFT

(11) **EP 3 483 581 B2**
(45) Veröffentlichungstag und Bekanntmachung des Hinweises auf die Entscheidung über den Einspruch: **26.08.2026**
(45) Hinweis auf die Patenterteilung: 26.02.2020
(21) Anmeldenummer: 18204784.5
(22) Anmeldetag: 07.11.2018
(51) Int. Cl.: G01M 13/04

(54) **VERFAHREN UND VORRICHTUNG ZUR ÜBERWACHUNG EINES LAGERSPIELS VON WÄLZLAGERN**
METHOD AND DEVICE FOR MONITORING A BEARING CLEARANCE OF ROLLING BEARINGS
METHODE ET DISPOSITIF PERMETTANT DE SURVEILLER LE JEU DE PALIER DE ROULEMENTS A ROULEAUX

(30) Priorität: 08.11.2017 DE 102017219887
(43) Veröffentlichungstag der Anmeldung: 15.05.2019
(73) Patentinhaber: Schaeffler Monitoring Services GmbH, 52134 Herzogenrath (DE)
(72) Erfinder: Reichhart, Marc, 90763 Fürth (DE)
(74) Vertreter: FDST Patentanwälte

(56) Entgegenhaltungen:
- CH-A2- 702 986
- DE-A1- 10 324 924

## Beschreibung

Die Erfindung betrifft eine Vorrichtung und ein Verfahren zur Zustandsüberwachung des Lagerspiels eines Wälzlagers, insbesondere des Lagerspiels eines Großlagers, speziell einer Windkraftanlage und dort besonders eines Hauptlagers.

Die Zustandsüberwachung erfolgt dabei nach der Montage des Wälzlagers. Unter Lagerspiel wird sowohl ein positives Lagerspiel mit Lagerluft als auch ein negatives Lagerspiel (vorgespanntes Lager) von Wälzlagereinheiten verstanden. Unter Wälzlagereinheit ist insbesondere ein einzelnes Lager mit Umbauteilen (z.B. Momentenlager) oder ein Wellensystem bestehend aus Welle und Gehäuse und beliebiger Wälzlageranzahl gemeint.

Bei den zu überwachenden Lagern handelt es sich allgemein um rotative Lager, also Lager, die im Betrieb um eine Rotationsachse umlaufend rotieren (und nicht nur um eine Drehachse über einen begrenzten Winkelbereich verschwenken). Speziell handelt es sich bei dem zu überwachenden Lager um ein Lager einer Windkraftanlage, beispielsweise das sogenannte Hauptlager, über das ein Rotor gelagert ist, an dem Rotorblätter befestigt sind.

Der Fokus liegt dabei auf der möglichst einfachen aber gleichzeitig präzisen Erfassung der das Lagerspiel beeinflussenden Schädigungen wie Verschleiß der Laufbahnen oder der Wälzkörper, Verschleiß im Lagersitz oder unzulässiges Setzen oder Lösen von Vorspann- oder Fixierelementen. Das Lagerspiel ist ein entscheidender Faktor für die Funktion eines Lagersystems. Vergrößert sich das Lagerspiel (bei positivem) oder verringert sich die Lagervorspannung aufgrund der genannten Mechanismen führt dies mittel- oder langfristig zu Folgeschädigungen des Lagersystems bis zum Ausfall. Wird allerdings eine unzulässige Lagerspielveränderung rechtzeitig erkannt, können entsprechende Maßnahmen ergriffen werden um Folgeschäden zu vermeiden.

Es gibt bereits einige Ansätze die sich mit der Messung der Lagervorspannung und/oder mit deren Beeinflussung befassen.

DE 10 2010 035 264 A1 beschreibt eine Vorrichtung zur Einstellung eines Axialspiels eines Lagers mittels Piezo-Aktuatoren. Ziel der Vorrichtung ist die Kompensation von Betriebsspieländerungen aufgrund von Temperatureinflüssen. Dazu wird mittels eines am Gehäuse angebrachten Sensors der axiale Abstand zum Lagerinnenring gemessen. Ändert sich der Abstand wird dies durch die Piezoelemente korrigiert, bis der Ausgangszustand wieder hergestellt ist. Eine Überwachung von Verschleiß, Setzen oder Lösen ist mit dieser Methode jedoch nicht möglich. Dies liegt daran, dass zum Beispiel Verschleiß am Lager mit der Verstelleinrichtung zu einer Abstandsvergrößerung und Verschleiß am gegenüberliegenden Lager zu einer Abstandsverkleinerung führt. Die Effekte können sich also gegenseitig aufheben. Zusätzlich ist die Messung von erheblichen Temperatureinwirkungen aus dem normalen Betrieb überlagert. Eine solche Vorrichtung ist deshalb nicht zum Condition Monitoring eines Lagerspiels geeignet, sondern nur zum Ausgleich von Wärmedehnungen.

DE 10 2009 051 498 A1 sieht eine Vorspannungsmesseinrichtung vor, wobei der radiale Abstand zwischen Außen- und Innenring gemessen wird. Der Abstandsmesswert wird ebenfalls zur Anpassung des Betriebsspiels bei Temperatureinfluss herangezogen, wobei hier die Korrektur des Betriebsspiels durch Temperieren eines der Lagerringe erreicht werden soll. Hier gilt ebenfalls, dass Verschleiß der Laufbahnen und/oder Wälzkörper nicht eindeutig detektiert werden kann, da die Messung zum einen durch die Temperatureffekte verfälscht wird. Zum anderen würde Verschleiß nicht zwangsläufig eine Veränderung des radialen Abstands verursachen, wenn zum Beispiel nur axiale Lastwechsel vorliegen würden.
Beide oben genannten Ansätze zielen also auf die Anpassung bzw. konstant Haltung des Betriebsspiels durch Ausgleich von Temperatureinflüssen, können jedoch nicht langfristige Veränderungen der Vorspannung bzw. des Lagerspiels durch Verschleiß, Setzen oder Lösen erkennen.

Da insbesondere die Temperaturverteilung in der Lagereinheit einen sehr großen Einfluss auf das Betriebsspiel hat, muss dieser Einfluss in der Messung und Auswertung ausgeschlossen oder zumindest ausreichend minimiert werden, um Verschleiß, Setzen oder Lösen detektieren zu können.

EP 2 801 729 A2 bietet hierfür hingegen einen Lösungsansatz. Hier wird ebenfalls über eine Messung des Abstands auf die Lagervorspannung geschlossen, wobei hier allerdings radiale und axiale Abstandsmessungen vorgesehen sind. In Verbindung mit zusätzlichen Temperaturverteilungsmessungen an der Lagerung kann hier eindeutig auf die vorliegende Lagervorspannung geschlossen werden und zusätzlich zwischen Temperatur und Verschleißeinfluss unterschieden werden. Allerdings sind mit dieser Messmethode eine Vielzahl von Sensoren und aufwendige Vorabberechnungen zur Ermittlung der Korrelationen erforderlich.

Dem genannten Stand der Technik ist gemeinsam, dass Laständerungen im Betrieb das Regelungs- und/oder Messergebnis stark verfälschen können, da derartige Laständerungen ebenfalls zu Abstandsänderungen führen.

Des Weiteren weisen alle Lagerungen Fertigungsabweichungen auf. Dabei kann es sich um Plan- und Rundlauffehler, Ebenheits- und Rundheitsabweichungen oder Oberflächenfehler handeln. Wird der Abstand im Betrieb zwischen einem drehenden und einem stehenden Teil gemessen, äußert sich dies in einem periodisch variierenden Abstandssignal, wobei die betragsmäßige Abstandsänderung durch Fertigungsabweichungen die dem Messziel zugrundeliegende Veränderung deutlich übersteigen kann. Wird dies in der Auswertung nicht berücksichtigt kann dies zu größten Streuungen im Messergebnis führen und dieses in Frage stellen.

Weiterhin ist aus der DE 103 24 924 A1 ein Gleitlager bekannt, bei dem zwischen zwei Lagerringen ein Gleitbelag angeordnet ist. Dessen Verschleißzustand wird über eine Abstandsmessung zwischen den Lagerringen ermittelt.

Auch aus der CH 702 986 A2 ist zur Messung des Verschleißes eines Lagers eines Kurbelzapfens eines Dieselmotors eine Abstandsmessung vorgesehen.

Der vorliegenden Erfindung liegt die Aufgabe zu Grunde, mit geringem Mess- und Berechnungsaufwand eine Zustandsüberwachung für Wälzlagersysteme zu ermöglichen und dennoch Verschleiß, Setzen und Lösen sicher zu detektieren. Dabei ist also das Ziel, das Lagerspiel nach Montage langfristig zu überwachen und nicht das Betriebsspiel abhängig von der Temperaturverteilung in der Lagerung zu ermitteln oder zu korrigieren.

Die Aufgabe wird gemäß der Erfindung gelöst durch ein Verfahren mit den Merkmalen des Anspruchs 1 sowie durch eine Vorrichtung mit den Merkmalen des Anspruchs 13. Die im Hinblick auf das Verfahren angeführten Vorteile und bevorzugten Ausgestaltungen sind sinngemäß auch auf die Vorrichtung zu übertragen.

Das Verfahren dient zur Überwachung eines Lagerspiels eines Wälzlagers, insbesondere eines Lagerspiels eines Großlagers, speziell einer Windkraftanlage und insbesondere zur Überwachung des Lagerspiels des Hauptlagers einer Windkraftanlage. Zur Überwachung wird dabei
- im Rahmen einer ersten Messreihe mit Hilfe zumindest eines Abstandssensors jeweils ein Abstand zwischen einem rotierenden Teil und einem stehenden Teil des Wälzlagers bei zumindest zwei sich insbesondere periodisch wiederholenden Lastzuständen gemessen,
- anhand der Messungen liegt eine Differenz der gemessenen Abstände vor, nachfolgend auch als Abstandsdelta bezeichnet; diese Differenz für die zumindest zwei sich wiederholenden Lastzustände wird bevorzugt aus den gemessenen Abständen ermittelt,
- es werden zu einem späteren Zeitpunkt die Messungen des Abstands bei den zumindest zwei Lastzuständen im Rahmen einer zweiten Messreihe wiederholt. Auf Basis der Veränderung Differenzen der Abstände (Abstandsdeltas) wird auf Veränderungen im Lagerspiel zurückgeschlossen. Insbesondere wird auch bei der zweiten Messreihe ein Abstandsdelta ermittelt und auf eine Änderung im Vergleich zu dem Abstandsdelta der ersten Messreihe überwacht.

Allgemein wird also auf Basis der Änderungen der Differenz (des Abstandsdeltas) auf Veränderungen im Lagerspiel geschlossen. Hierbei werden wahlweise die Abstände Anhand der Änderung, insbesondere bei einer Zu- oder Abnahme des Abstandsdeltas um einen vorgegebenen Wert (absolut und / oder prozentual), wird beispielsweise auf eine unzulässige Änderung geschlossen und es werden geeignete Maßnahmen ergriffen, wie beispielsweise die Empfehlung für eine Nachjustage des Lagerspiels oder die Empfehlung für einen Lagertausch. Alternativ oder Ergänzend wird auf Basis der Änderung des Abstandsdeltas eine Vorhersage für die weitere (Rest-) Laufzeit des Lagers ggf. bis zu einer erforderlichen Revision etc. getroffen (Condition Monitoring).

Bei dem Verfahren werden daher zunächst bei der ersten Messreihe vorzugsweise zumindest zwei Einzelmessungen bei unterschiedlichen Lastzuständen vorgenommen und es werden zumindest zwei Abstandswerte (pro Lastzustand ein Abstandswert) erhalten. Hierbei werden beispielsweise zwei Absolutwerte erfasst (gemessen) und in Relation zueinander gesetzt, um die Abstandsdifferenz zu erhalten. Alternativ erfolgt die Erfassung und Ermittlung der Abstandsdifferenz durch eine Relativmessung, d.h. es wird nur die Abstandsänderung erfasst, ohne dass ein Absolutwert für die zwei Abstandswerte gemessen wird. Zeitlich später im Laufe des Betriebs (z.B. nach Wochen, Monaten nach der ersten Messreihe) und im Rahmen des Condition Monitorings werden dann bei der zweiten Messreihe erneut zumindest zwei Einzelmessungen bei den gleichen oder zumindest vergleichbaren Lastzuständen wie bei der ersten Messreihe durchgeführt und wiederum zumindest zwei Abstandswerte erfasst.

Von besonderer Bedeutung ist, dass nicht auf Basis einer absoluten, ggf. auch gemittelten Abstandsmessung eine Aussage über das Lagerspiel getroffen wird, sondern vielmehr lediglich auf Basis der Veränderung des Abstandsdeltas im Zeitverlauf bei zumindest zwei definierten Lastzuständen. Dies erfolgt insbesondere durch eine Relativmessung. Der wesentliche Vorteil hierbei ist darin zu sehen, dass der Einfluss der variierenden Lastzustände für das Lagerspiel gerade nicht aufwändig erfasst und herausgerechnet werden muss.

Bei einer jeweiligen Einzelmessung zur Bestimmung des Abstands bei einem definierten Lastzustand wird beispielsweise über einen gewissen Zeitraum (z.B. mehrere Sekunden bis Minuten) kontinuierlich der Abstand gemessen und aus den mehreren Messwerten ein Mittelwert als Abstandswert gebildet. Für die Bestimmung des Abstandsdeltas wird dann beispielsweise der Abstand der Mittelwerte bei den verschiedenen Lastzuständen herangezogen.

Das Verfahren macht sich die in einem Großteil der Anwendungen vorliegenden veränderlichen Lastzustände zu Nutze, die bei den zum Stand der Technik zuvor beschriebenen Ansätzen hingegen ein Problem darstellen. Abhängig vom Lagerspiel (positiv oder negativ) ergeben sich nämlich unterschiedliche lastabhängige Abstände zwischen den Lagerringen, deren Umbauteilen (wie beispielsweise Lagersitz, ein Spannring zum Spannen des Lagers etc.) und/oder Welle und Gehäuse. Wird an einer bestimmten Stelle gemessen ändert sich hier der Abstand in Abhängigkeit des Lastzustandes aufgrund von elastischen Verformungen der Bauteile. Unter Lastzustand wird eine Kombination von bestimmten Kräften, Momenten, Temperaturen, Drehzahl usw. zu einem diskreten Zeitpunkt verstanden, wobei es sich bei einem Lastzustand auch um einen lastfreien Zustand handeln kann.

Unter Lastzuständen werden hierbei insbesondere folgende variierende Lastzustände angesehen:
- Temperaturbedingte Lastzustände: Durch Temperaturvariationen kann es zu unterschiedlichem Dehnungsverhalten der einzelnen Komponenten kommen, die zu einer Variation des Lagerspiels führen kann, beispielsweise im Ruhezustand und in einem Betriebszustand
- Windlastbedingte Lastzustände: Durch unterschiedliche Windlasten werden unterschiedliche Kräfte in das Lager eingebracht, die ebenfalls zu einer Veränderung des Lagerspiels führen können
- Drehzahlabhängige Lastzustände, beispielsweise durch unterschiedliche Fliehkräfte

Im einfachsten Fall wechselt in einer Anwendung der Lastzustand zwischen zwei Niveaus, beispielsweise zwei unterschiedliche Temperaturniveaus oder zwei unterschiedlichen Windlasten. Es kann also eine relative Abstandsänderung zwischen den beiden Lastzuständen ermittelt werden. Solange das Lagerspiel konstant bleibt, ergibt sich bei gleicher Lastzustandsänderung auch ein gleiches Abstandsdelta. Tritt eine das Lagerspiel beeinflussende Schädigung auf (Lagerspiel vergrößert sich oder Vorspannung verringert sich) führt dies immer zu einer Vergrößerung des Abstandsdeltas bei gleicher Lastzustandsänderung. Durch Überwachung des Deltas (Trendbildung) wird also eine Veränderung des Lagerspiels erkannt. Bei dieser Vorgehensweise ist es nicht zwingend notwendig, die genauen Lastzustände oder das vorliegende Lagerspiel zu kennen. Es wird davon ausgegangen, dass bei Inbetriebnahme eine geeignete Lagervorspannung vorliegt und sich die Lastzustände im Laufe der Zeit in gleicher Weise wiederholen. Dies ist in den meisten Anwendungen der Fall.

Es wird z.B. eine zulässige prozentuale Vergrößerung definiert, ab der die Lagerung genauer überprüft werden muss. Sind die Lastzustände bekannt, wird vorzugsweise durch eine vorherige Berechnung und/oder durch Verwendung einer in einer Auswerteeinheit hinterlegten Korrelation aber auch genau auf die Spielver-änderung geschlossen.

Bei den Lasten kann es sich um Radiallasten, Axiallasten oder Momente handeln, die also in radialer Richtung oder in axialer Richtung oder als Verkippung auf das Lager einwirken.

Bei einem Radiallager, beispielsweise ein spielbehaftetes radiales Rollenlager als Loslager, wird beispielsweise ein Abstand zwischen dem Gehäuse und der Welle erfasst. Handelt es sich bei der Radiallast um eine wechselnde Last, d.h. Ändert sich die Richtung der Last (Lastrichtungsumkehr) zwischen zwei Lastzuständen ist durch die Messung das Spiel einfach bestimmbar und eine Spielvergrößerung (anwachsendes Abstandsdelta mit der Zeit) ist gut zu erfassen. Das System funktioniert aber auch, wenn eine schwellende Belastung vorliegt. Unter schwellende Belastung wird verstanden, dass sich der Betrag der Belastung ändert, die Richtung der Last aber nahezu gleich bleibt.

Dies liegt daran, dass bei kleinem Lagerspiel mehr Wälzkörper tragen, als bei großem Lagerspiel. Deshalb ist die Lagersteifigkeit bei kleinem Lagerspiel höher als bei großem Lagerspiel. Demzufolge ergibt sich also abhängig vom Lagerspiel ebenfalls ein unterschiedliches Abstandsdelta bei schwellender Belastung.

Für eine vorgespannte Lagerung gilt analog, dass bei großer Vorspannung das gemessene Delta geringer ausfällt.

Bei einer nicht unter den Schutzumfang fallenden Ausgestaltung ("alternative Ausgestaltung") wird ein Wechsel zwischen zwei vorgegebenen Lastzuständen erfasst, beispielsweise der Wechsel zwischen zwei Drehzahlniveaus, zwischen zwei Temperaturniveaus oder zwischen zwei definierten Windlastzuständen. Die Erfassung der Lastzustände erfolgt beispielsweise mit geeigneten Sensoren und / oder wird aus einer Anlagensteuerung erhalten. Liegt jeweils der definierte Lastzustand vor, bei dem die jeweilige Messreihe erfolgen soll, so wird der Abstand erfasst. Zwischen den Messungen des Abstands bei den zumindest zwei definierten Lastzuständen liegt typischerweise ein gewisser Zeitraum von Sekunden, Minuten, Stunden, oder auch Tagen, da der Wechsel zwischen den beiden Lastzuständen eine gewisse Zeit benötigt. Der Zeitraum hängt dabei insbesondere von der Art des Lastwechsels ab. So treten z.B. windlastbedingte stochastische Laständerungen in sehr kurzen Zeiträumen im Bereich von wenigen Sekunden auf. Bei derartigen (stochastischen) Laständerungen liegt der Zeitraum beispielsweise im Bereich von einigen 10 Sekunden (bis z.B. maximal <1min, <5 min oder <10 min). Bei Laständerungen z.B. infolge eines Anfahrens der Anlage (kalt - betriebswarm) liegt der Zeitraum z.B. im Bereich von einigen 10 min bis zu einer Stunde oder auch bis zu mehreren Stunden, z.B. bis zu 6 oder auch bis zu 10 Stunden.

Liegen in einer Wälzlageranwendung zwei bekannte, sich insbesondere periodisch wiederholende Lastzustände vor, wie z.B. beim Wechsel von einem lastfreien Zustand in einen definierten Betriebszustand im Teillast- oder Volllastbereich, und ist der Zeitpunkt des Lastwechsels bekannt, wird bei der alternativen Ausgestaltung vorzugsweise während einer über einen Zeitraum, der sich zumindest über den Lastwechsel erstreckt, andauernden Messreihe ein Wechsel von einem zum anderen Lastzustand erfasst und es werden die beiden Abstände vor und nach dem Lastwechsel ermittelt.

Ist der Zeitpunkt des Lastwechsels bei der alternativen Ausgestaltung nicht bekannt, werden vorzugsweise über einen ausreichend langen Zeitraum Messungen durchgeführt, damit innerhalb dieses Zeitraums mindestens ein Wechsel und damit ein Abstandsdelta erfasst wird. Dieser Zeitraum liegt beispielsweise bei Stunden, Tagen oder auch Wochen. Die einzelne Messung des Abstands als solche dauert demgegenüber lediglich wenige Sekunden bis z.B. einige Minuten (1-3 min).

In bevorzugter Ausgestaltung werden bei der alternativen Ausgestaltung die unterschiedlichen Lastzustände bewusst erzeugt, d.h. durch kontrollierte Eingriffe z.B. in die Anlagensteuerung eingestellt. Dies ist beispielsweise der Wechsel bei einem Anfahren der Anlage von einem kalten Zustand in einen betriebswarmen Zustand.

In vielen Wälzlageranwendungen liegen jedoch komplexere Lastzustandsveränderungen vor. Als besonders komplexes Beispiel soll hier die Hauptlagerung einer Windkraftanlage dienen. Ein Hauptanteil der relevanten Lastveränderungen resultiert aus stochastischen veränderlichen Windlasten, d.h. über einen kurzen Zeitraum liegt ein zufälliges Last-Zeitverhalten vor. Unter einem kurzen Zeitraum wird hierbei ein Zeitraum von typischerweise mehreren Sekunden, z.B. 5 bis 20 sec bis einige Minuten (1-10 min) verstanden. Dieses zufällige kurzfristige Last-Zeitverhalten wiederholt sich jedoch über einen langen Zeitraum gesehen zumindest in ähnlicher Form. So treten beispielsweise bei einer konstanten mittleren Windgeschwindigkeit stochastische Variationen, also Schwankungen auf. Erfahrungen zeigen, dass diese Schwankungen im Rahmen einer statistischen Betrachtung gleich oder sehr ähnlich sind. Diese Lastschwankungen gehen einher mit unterschiedlichen Abständen.

Erfindungsgemäß werden daher über einen vorgegebenen Messzeitraum, insbesondere im Bereich von mehreren Sekunden bis einige Minuten (1-10 min) eine Messreihe mit einer Vielzahl (zumindest 10, vorzugsweise zumindest 50 und weiter vorzugsweise von zumindest 500) von einzelnen Messungen mit beispielsweise einer Frequenz im Bereich von z.B. 1 bis 100Hz, beispielsweise von 10Hz durchgeführt. Dabei wird ein sich insbesondere periodisch wiederholendes Last-Zeitverhalten der Abstände erfasst. Es wird also quasi ein kontinuierlicher Verlauf der Abstände über den Messzeitraum erfasst. Dieser Verlauf wird im Hinblick auf die Differenzen der Abstände ausgewertet. Die Differenzen sind dabei durch die (stochastisch) veränderlichen Lasten bedingt. Eine derartige Messreihe wird zu einem späteren Zeitpunkt als die zweite Messreihe im Rahmen des Condition Monitorings durchgeführt. Die beiden Messreihen werden ausgewertet und zwar auf Basis der Änderungen der Differenz der einzelnen Abstandswerte der jeweiligen Messreihe.

Die beiden Messreihen werden dabei vorzugsweise bei einer gleichen Grundlast, also einem gleichen Basis-Lastzustand durchgeführt, innerhalb dessen die stochastischen Abweichungen auftreten. Speziell wird dieser Basis-Lastzustand durch eine konstante mittlere Last (z.B. Windgeschwindigkeit (Windlast)) definiert. Der Basis-Lastzustand ist beispielsweise eine gleiche mittlere Last (Windgeschwindigkeit) über den Zeitraum für die Durchführung der Messreihe und vorzugsweise auch mit einer gleichen oder ähnlichen statistischen Variation (Standardabweichung oder Varianz) der mittleren Last (Windgeschwindigkeit) im Messzeitraum.

Die Erfindung macht sich also die stochastischen Veränderungen zu Nutze, da das Ziel eine langfristige Überwachung des Lagerspiels ist. Es werden also regelmäßig Messreihen über einen diskreten Zeitraum durchgeführt (einige Sekunden bis mehrere Minuten). Es wird also eine Reihe von Messungen durchgeführt. Innerhalb einer solchen Messreihe kommt es zu stochastischen Änderungen des Lastzustandes und damit zu einer stochastischen Variation des Abstandsignals. Gemäß einer ersten erfindungsgemäßen Variante wird eine Differenz aus Maximum und Minimum innerhalb einer solchen Messreihe (also bei Vorliegen eines einzigen Lastzustands) ermittelt und im Hinblick auf eine Veränderung des Lagespiels ausgewertet.

Ein solches Verfahren würde allerdings einer erheblichen Streuung unterliegen, würde man die Ergebnisse mehrerer Messungen vergleichen. Es wird deshalb gemäß einer zweiten erfindungsgemäßen Variante vorgeschlagen, einen statistischen Kennwert als Maß für die Differenz der gemessenen Abstände zu ermitteln und diesen statistischen Kennwert auf Veränderungen zu überprüfen. Bei dem statistischen Kennwert handelt es sich um die die Varianz oder die Standardabweichung der einzelnen Messwerte.

Für die Überwachung des Lagerspiels ist grundsätzlich ein Abstandssensor ausreichend, der möglichst an einer Stelle positioniert wird, wo abhängig von der Ausführung der Lagerung und den Lastzuständen der Anwendung die größten Verformungen bzw. Verschiebungen zwischen rotativen und stehenden Teilen auftreten. Dazu muss die Abstandsmessung nicht notwendiger Weise in direkter Lagerumgebung geschehen. Oftmals verstärkt sich der Effekt sogar durch Hebelwirkung in einiger Entfernung zum Lager. Es ist allerdings bei der Positionierung darauf zu achten, dass nicht andere Verformungseffekte aufgrund z.B. anderer Maschinenelemente das Ergebnis unzulässig beeinflussen. Weiterhin ist eine Zugänglichkeit des Sensors von Vorteil, um diesen gegebenenfalls tauschen zu können. Ist dies nicht realisierbar können aus Redundanzgründen auch mehrere Sensoren direkt nebeneinander platziert werden.

Eine weitere wesentliche Herausforderung liegt in der Erfassung des Abstandssignals und dessen Auswertung. Aufgrund von Toleranzen und mechanischen Abweichungen bei der Fertigung oder Montagefehlern sind Rund-, Plan-, Eben- und Rundheitsabweichungen, also allgemein Planlauf- und Rundlauffehler unvermeidlich. Unter Rundlauffehlern werden allgemein radiale Variationen des Abstands einer umlaufenden, radialen Fläche eines rotierenden Bauteils zur Rotationschase verstanden. Unter Planlauffehler werden allgemein Abweichungen einer planen Stirnfläche des rotierenden Bauteils von einer exakten Planebene (senkrecht zur Rotationsachse orientiert) verstanden. Da vom stehenden zum drehenden System (oder umgekehrt) gemessen wird ergibt sich im Stillstand ein unterschiedlicher Messwert je nach Winkelposition der Rotationsteile zueinander oder aber im Falle einer Messung im Betrieb ein u.U. stark variierender Abstandswert über der Zeit. Dies gilt insbesondere dann, wenn nicht auf einen Lagerring, sondern z.B. von Gehäuse auf ein Wellenanbauteil (z.B. Wellenmutter) gemessen wird, das keine besonderen Form- und Lagetoleranzen an der Messfläche aufweist, bei dem also große Rundlauffehler oder Planlauffehler zu erwarten sind.

Insbesondere im Falle der Verwendung nur eines Sensors wird dieses Problem vorzugsweise dadurch gelöst, dass die Montage- oder Fertigungsabweichungen, nachfolgend kurz als Fertigungsabweichungen bezeichnet, durch eine Messung erfasst und durch eine Auswerteeinheit kompensiert werden. Vorzugsweise werden die Fertigungsabweichungen im Rahmen einer Referenzmessung erfasst und bei der späteren Messung der Abstandswerte berücksichtigt. Für die Referenzmessung wird die Lagereinheit rotiert (mindestens eine oder aber mehrere Umdrehung) wobei die Winkelposition und der dazugehörige Abstand erfasst und in einer Auswerteeinheit dauerhaft gespeichert werden. Die Referenzmessung wird vorzugweise in einem lastfreien Zustand durchgeführt. Zumindest wird während der Dauer der Referenzmessung sichergestellt, dass sich der Lastzustand der Lagereinheit während der Referenzmessung nicht verändert. Bei späteren Messungen im Betrieb wird dann vorzugsweise die Abstandsänderung aufgrund von Fertigungsabweichungen vom Messergebnis abgezogen.

Dazu werden die Werte der Referenzmessung mit der Betriebsmessung vorzugsweise Positions- bzw. Zeitmäßig in Übereinstimmung gebracht. Dies wird beispielsweise durch eine zusätzliche Winkelpositionserfassung erreicht, d.h. die Werte des Abstands werden bei definierten Drehwinkeln erfasst und nur Abstandswerte, die bei gleichen Drehwinkeln erfasst wurden, werden miteinander verglichen.

Besonders vorteilhaft ist das Vorsehen von mindestens einer Markierung in einer Messfläche, gegen die der Abstandssensor misst. Bei einer solchen Markierung kann es sich z.B. um eine Vertiefung oder eine Erhöhung handeln. Über die entsprechenden Ausschläge (infolge einer abrupten Abstandsänderung wegen der Vertiefung / Erhöhung in der Messfläche) im über den Zeitverlauf gemessenen Abstandssignal (Zeitsignal) wird die Referenzmessung mit der Betriebsmessung in Übereinstimmung gebracht, indem die Ausschläge einander zugeordnet werden.

Vorzugsweise wird - falls erforderlich - die Referenzmessung gedehnt bzw. gestaucht, um Drehzahlunterschiede auszugleichen. Wichtig für die Ausschläge ist, dass sie über dem Niveau der zu erwartenden Abstände im Betrieb liegen. D.h. die Vertiefung bzw. Erhebung ist größer (beispielsweise zumindest um Faktor 1,5 oder 2) einer maximal zu erwartenden Veränderung des zu messenden Abstands.

Vorteilhafterweise werden drei oder mehr Abstandssensoren verwendet, wobei es weiterhin vorteilhaft ist, diese in gleichen Winkelabständen über den Umfang zu verteilen. Zur Auswertung werden vorzugsweise dann jeweils die einzelnen Abstandsdeltas (Differenzen zwischen den Lastzuständen) der einzelnen Abstandssensoren herangezogen.

Vorzugsweise wird insbesondere zusätzlich der zeitgleiche Mittelwert der mehreren Abstandssensoren und des Abstandsdeltas des Mittelwerts bei einer jeweiligen Messreihe erfasst. Unter zeitgleichem Mittelwert wird verstanden, dass die mehreren Abstandssensoren die Abstandswerte zur gleichen Zeit (aber eben an unterschiedlichen (Winkel-) Positionen erfassen und diese Abstandswerte gemittelt werden. Die Summe der gemessenen Einzelabstände (zu einem diskreten Zeitpunkt) der mehreren Sensoren wird hierzu durch die Sensoranzahl geteilt.

Dies hat den großen Vorteil, dass störende Einflüsse wie Plan- und Rundlauffehler verkleinert werden. Würde es sich bei einem Plan- oder Rundlauffehler um einen reinen Sinusverlauf handeln, wäre durch eine solche Auswertung der verfälschende Einfluss eliminiert. Da aber einem oftmals sinusförmigen Verlauf zufällige Abweichungen (z.B. wellenförmig oder lokale Erhebungen/Vertiefungen) überlagert sind, bildet sich beim zeitgleichen Mittelwert ebenfalls eine periodische Abstandsveränderung während einer Rotation (360°) ab. Die Amplitude dieser Abstandsveränderung ist jedoch deutlich geringer als die der Einzelabstandsmessungen mit den einzelnen Abstandssensoren. Die Periodizität, also Frequenz der Abstandsveränderung ergibt sich aus dem Produkt der Drehfrequenz der Welle und der Sensoranzahl.

Aus dem Abstandssignal kann deshalb auch die aktuelle Drehzahl errechnet werden. Vorzugsweise wird diese auch errechnet. Hier gibt es verschiedene Möglichkeiten z.B. das Erfassen der Zeit zwischen zwei Ausschlägen der Oben erwähnten Markierungen oder über FFT-Analysen. Die Drehzahl kann dann wiederum für weitere Auswertungen herangezogen werden.

Eine besonders vorteilhafte Methode zur Erfassung des Anteils der Fertigungsabweichungen im Abstandssignal ist, eine Phasenverschiebung der Messsignale der einzelnen Abstandssensoren durchzuführen. Dabei werden die einzelnen Messsignale entsprechend ihrer Winkelposition, also der Winkelposition des zugeordneten Abstandssensors (zeitlich) verschoben, sodass sie deckungsgleich übereinander liegen. D.h. die einzelnen Messwerte (Abstandswerte) oder Sensorsignale werden zeitlich derart verschoben, dass sie übereinander liegen. Es liegen dann also jeweils die Messwerte bezogen auf die gleiche Mess-Winkelposition übereinander und können gemittelt werden. Der Mittelwert wird als Abstandswert herangezogen. Dadurch lässt sich die Abstandsänderung aufgrund von Fertigungsabweichungen relativ genau extrahieren, selbst dann, wenn während der Messung Änderungen des Lastzustandes auftreten.

Insbesondere wenn die Abstandsdeltas aufgrund der Laständerungen im Vergleich zu den Fertigungsdeltas groß sind wird die Messung vorzugsweise über mehrere Umdrehungen ausgewertet und gemittelt. Diese kann dann wiederum von den Einzelsignalen abgezogen werden Als Ergebnis nimmt die Schwankung der Abstandssignale deutlich ab und es kann die Abstandsänderung aufgrund des Lastzustandes extrahiert werden.

Eine Kompensation der Abstandsänderung durch Rund- und Planlaufabweichungen ist insbesondere von Vorteil, wenn statistische Kennwerte für die Ermittlung des Abstandsdeltas wie z.B. die Standardabweichung der Abstandsvariation während einer Messreihe bei einem Lastzustand ermittelt werden sollen. Andernfalls wären evtl. die Abstandsvariation aufgrund der Fertigungstoleranzen derart dominant, dass die Zunahme des Abstandsdeltas aufgrund von Veränderungen des Lagerspiels in der Auswertung untergehen würde.

Grundsätzlich ist es aber auch von Interesse, das Rund- und Planlaufverhalten über der Zeit zu überwachen. Da durch die oben beschriebenen Verfahren, insbesondere die Mittelung der Abstandswerte über zumindest eine volle Umdrehung, das Rund-und Planlaufverhalten extrahiert werden, ist es möglich diese auch qualitativ zu überwachen. Wird z.B. ein Lagerring fehlerhaft montiert, sodass teilweise ein Spalt in der Lageranlagefläche vorhanden ist, wirkt sich dies auf den Rund- bzw. Planlaufverlauf der Abstandsmessung aus. Kommt es später im Betrieb zum Setzen, sodass sich der Spalt schließt, verändert sich das Plan- und Rundlaufverhalten qualitativ. Dies führt natürlicherweise auch zu einer Veränderung des Lagerspiels.

Im einfachsten Fall wird das Rund-und / oder Planlaufverhalten durch eine weitere Referenzmessung bei definiertem Lastzustand durchgeführt und insbesondere mit der früheren Referenzmessung verglichen.

In dem Fall, dass konstante Lastzustände über mehrere Umdrehungen vorliegen, ist weiterhin in bevorzugter Weiterbildung vorgesehen, Änderungen der Abstandswerte aufgrund von Fertigungsabweichungen durch Bildung eines gleitenden Mittelwertes zu eliminieren, um den vorliegenden Abstandswert aufgrund des aktuellen Lastzustandes (exakt) zu bestimmen und das Abstandsdelta zu anderen Lastzuständen zu ermitteln. Dazu wird bevorzugt der periodische Charakter des Abstandssignals ausgenutzt. Da die Drehzahl wie Oben beschrieben aus dem Signal bestimmbar ist, ist es möglich den Bereich für das gleitende Mittel als das n-fache einer Rotorumdrehung zu definieren, wobei n größergleich 1 und vorzugsweise bei 2 ist und maximal bei 10 liegt. Dadurch ist es möglich, den Plan- und Rundlaufeinfluss in der Messung komplett zu eliminieren. Dies liegt daran, dass der Mittelwert des Plan- und Rundlaufverlaufs über eine Rotorumdrehung oder deren Vielfachen konstant ist.

Bei den meisten Wälzlageranwendungen können unterschiedliche Betriebsbedingungen vorliegen, z.B. Teillast- oder Volllastbetrieb. Für die verschiedenen Betriebsbedingungen unterscheidet sich in der Regel auch das Niveau der Lastzustandswechsel. Um dennoch aussagekräftige Trends des Abstandsdeltas oder des Plan- und Rundlaufverhaltens bilden zu können, werden vorzugsweise die relevanten Betriebsparameter erfasst und die Messergebnisse des Abstandsdeltas entsprechend klassifiziert. Hier spielt insbesondere die Temperatur der Lagereinheit eine wichtige Rolle. Deshalb ist es vorteilhaft, in den Abstandssensor bereits einen Temperatursensor zu integrieren. Dies macht insbesondere dann Sinn, wenn ein Messverfahren gewählt wird, wo bereits der Abstandssensor eine Temperaturdrift aufweist (z.B. induktiver Abstandssensor). Der Temperaturmesswert kann dann für die Klassierung der Abstandsdeltas mit herangezogen werden.

Wenn von einer Auswerteeinheit gesprochen wird, bedeutet dies nicht zwangsweise, dass es sich dabei um eine separate Einheit handelt. Die Hardware bzw. die Auswertealgorithmen und Logiken können dabei teilweise oder vollständig in ein übergeordnetes System integriert werden. Es ist z.B. vorteilhaft die Auswertung der Abstandsmessungen in einer Auswerteeinheit durchzuführen. Das Ergebnis kann dann z.B. an ein bereits existierendes Monitoring System weitergegeben werden wo dann die Klassierung nach Betriebszustandsparametern und Trendbildung erfolgt.

Die oben beschriebenen Auswerteverfahren der Abstandsmessung erfolgen vorzugsweise kontinuierlich. Dazu werden die z.B. gleitenden Messdaten über einen notwendigen diskreten Zeitraum in einen Zwischenspeicher geladen und kontinuierlich ausgewertet und ausgegeben. Die Ausgabe startet dann naturgemäß zeitverzögert zum Start der Messung, da zunächst eine gewisse Anzahl an Messwerten bzw. ein gewisser Messverlauf vorhanden sein muss um z.B. FFT-Analysen oder gleitende Mittelwertsbildung durchführen zu können. Dies erfordert unter Umständen große Rechnerleistungen. Es ist aber auch möglich in regelmäßigen Abständen diskrete Messungen durchzuführen, diese danach auszuwerten und den ausgewerteten Wert auszugeben.

Ausführungsbeispiele der Erfindung werden nachfolgend anhand der Figuren näher erläutert. Diese zeigen in teilweise stark vereinfachten Darstellungen:
- Fig. 1: eine ausschnittweise Darstellung einer Lagereinheit, bei der zu Illustrationszwecken unterschiedliche Lagerzustände dargestellt sind,
- Fig. 2A: einen zeitlicher Verlauf eines Lastzustandes und korreliert hierzu den zeitliche Verlauf eines Abstands zwischen einem rotierenden und einem stehenden Teil bei einem Ausgangszustand des Lagers sowie
- Fig. 2B: die Verläufe gem. Fig. 2A, jedoch nach einer gewissen Betriebszeit und bei Verschleiß,
- Fig. 3A: den zeitlichen Verlauf eines stochastisch variierenden Lastzustands sowie ein hierzu korrelierter Verlauf des Abstands zwischen einem rotierenden und einem stehenden Teil bei einem Ausgangszustand des Lagers sowie
- Fig. 3B: die Verläufe gem. Fig. 3A, jedoch nach einer gewissen Betriebszeit und bei Verschleiß,
- Fig. 4A: den zeitlichen Verlauf des Abstands zwischen einem rotierenden und einem stehenden Teil, welcher Fertigungsabweichungen aufweist,
- Fig. 4B: den zeitlichen Verlauf des Abstands einer Referenzmessung zur Ermittlung der Fertigungsabweichungen sowie
- Fig. 4C: den in Fig. 4A dargestellte Verlauf des Abstands nach Korrektur um die Fertigungsabweichungen gemäß Fig. 4B.

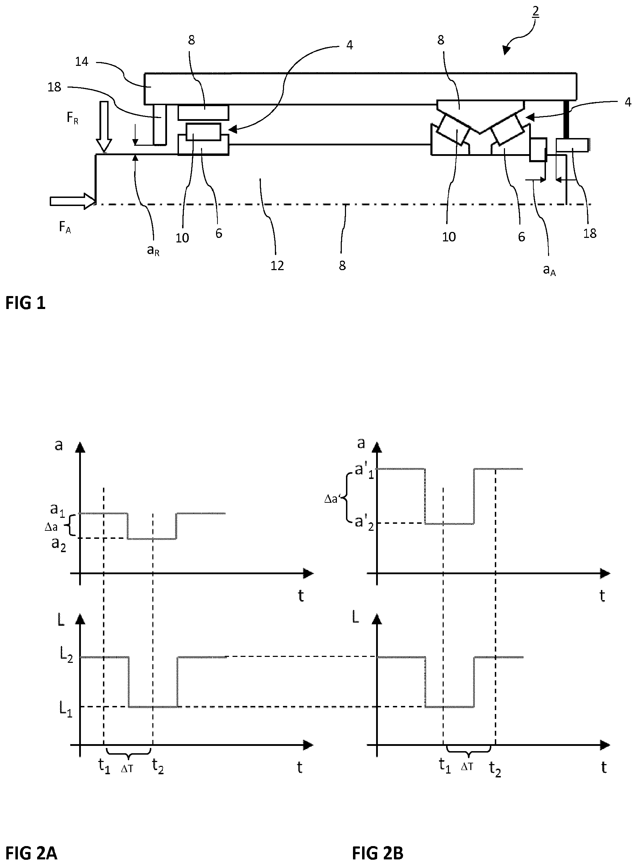

In der Fig. 1 ist beispielhaft und stark schematisiert eine Lagereinheit 2 dargestellt. Bei der dargestellten Lagereinheit 2 handelt es sich nicht zwingend um eine reale Situation, vielmehr dient die Fig. 1 zur Erläuterung von unterschiedlichen Zuständen. In der dargestellten Fig. 1 weist die Lagereinheit 2 zwei zueinander beabstandete Wälzlager 4 auf. Das auf der rechten Bildhälfte dargestellte Wälzlager 4 ist dabei als ein doppelreihiges, angestelltes und vorgespanntes Rollenlager ausgebildet. Das auf der linken Bildhälfte dargestellte Wälzlager 4 ist dem gegenüber als ein einreihiges Rollenlager als Loslager mit positivem Lagerspiel (im Unterschied zu dem negativen Lagerspiel bei einem vorgespannten Lager) ausgebildet.

Ein jeweiliges Wälzlager 4 weist jeweils zumindest einen Innenring 6, einen Außenring 8 sowie dazwischen angeordnete Wälzkörper 10 auf. Bei dem auf der linken Bildhälfte dargestellten Wälzlager 4 mit dem positiven Lagerspiel ist daher sogenannte Lagerluft zwischen den Wälzkörpern 10 und einem der Ringe 6, 8 ausgebildet und dargestellt.

Die Wälzlager 4 dienen allgemein zum Lagern eines Rotors 12 gegenüber einem Stator 14. Im Ausführungsbeispiel ist das innenliegende Teil als Rotor 12 ausgebildet, welcher im Betrieb um eine Rotationsaxe 16 rotiert. Der Rotor 12 wird dabei häufig auch als Welle bezeichnet. Beim Stator 14 handelt es sich beispielsweise um ein (Lager-) Gehäuse der gesamten Lagereinheit.

Das vorliegend beschriebene Verfahren wird insbesondere bei Großlagern und speziell bei einem Hauptlager einer Windkraftanlage eingesetzt. Unter Großlager werden allgemein Lager verstanden, die für hohe Traglasten beispielsweise von mehreren Tonnen ausgebildet sind und typischerweise einen Durchmesser größer 0,5 Meter und insbesondere größer zwei Meter aufweisen. Das Hauptlager einer Windkraftanlage ist ein derartiges Großlager. Mit dem Hauptlager wird ein hier nicht näher dargestellter Rotor der Windkraftanlage gelagert, welcher an seinem Ende eine Rotornabe trägt. An dieser sind die einzelnen Rotorblätter angeordnet, über die die Windkraft aufgenommen und in eine Rotationsbewegung des Rotors übertragen wird.

Das hier beschriebene Verfahren ist jedoch nicht zwingend auf derartige Großlager beschränkt. Gerade bei solchen Großlagern ist jedoch die korrekte Einstellung und Beibehaltung eines Lagerspiels von entscheidender Bedeutung für die Funktionsfähigkeit der Lagereinheit 2.

Während des Betriebs können dabei sowohl radiale Lagerkräfte F_{R}, axiale Lagerkräfte F_{A} sowie Momente M auftreten. Diese Lagerkräfte variieren dabei lastabhängig, also in Abhängigkeit der aktuell auf die einzelnen Lagerbauteile wirkenden Lasten. Speziell aufgrund der Größe der Lagereinheit 2 machen sich derartige Laständerungen insbesondere in Abstandsänderungen zwischen einem rotierenden Teil, beispielsweise dem Rotor 12 und einem stehenden Teil, beispielsweise dem Stator 14 bemerkbar.

In der Fig. 1 sind beispielhaft zwei Abstandssensoren 18 dargestellt, die zur Messung eines radialen Abstands a_{R} beziehungsweise eines axialen Abstands a_{A} ausgebildet sind. Die Abstandssensoren 18 messen dabei jeweils auf eine hier nicht näher dargestellte Messfläche. Diese ist beispielsweise am Rotor 18 oder an einem Hilfsbauteil angeordnet. Bei der Überwachung des Lagerspiels wird zumindest einer der Abstände, vorzugsweise beide im Rahmen eins Condition Monitorings überwacht und ausgewertet. Der Einfachheit halber wird nachfolgend lediglich von einem Abstand a gesprochen.

Unter Lastzustände werden allgemein auf das Wälzlager 4 einwirkende Momente, Kräfte, Drücke, Temperaturen oder auch Drehzahlen verstanden. Bei diesen Lastzuständen handelt es sich teilweise um abgeleitete Lastzustände aus externen auf das Lager aufgebrachte Lasten, speziell beispielsweise Windlasten, als Hauptursache für variierende Lastzustände. Unterschiedliche Lastzustände ergeben sich weiterhin beispielsweise aus einem lastfreien Betrieb, einen Betrieb bei Teillast und einem Betrieb bei Volllast. Weiterhin ergeben sich unterschiedliche Lastzustände beispielsweise beim Anfahren, wenn die Anlage und das Wälzlager 4 noch Umgebungstemperatur aufweisen und sämtliche Bauteile des Lagers quasi auf gleichem Temperaturniveau sind und einer nachfolgenden Betriebssituation, mit einer erhöhten Betriebstemperatur. Diese zeichnet sich auch durch Temperaturgradienten zwischen den einzelnen Bauteilen aus, was zu Spannungen etc. und damit zu unterschiedlichen Momenten und Kräften führen kann.

Die Figuren 2A, 2B zeigen jeweils in der unteren Bildhälfte einen zeitlichen Verlauf eines Lastzustands L. Diese ist vereinfacht durch eine Stufenfunktion zwischen zwei Lastzuständen L1, L2 dargestellt. Die Lastzustände wechseln innerhalb eines Messzeitraums ΔT. Korreliert zu den variierenden Lastzuständen L ändert sich auch der gemessene Abstand a. Dieser verringert sich im Ausführungsbeispiel um eine Abstandsdifferenz Δa. Diese wird auch als Abstandsdelta bezeichnet.

Bei einer alternativen Ausgestaltung, die nicht unter den Schutzbereich der Ansprüche fällt, werden zur Erfassung der beiden Abstände a1, a2 bei den Lastzuständen L1, L2 im Ausgangszustand gemäß der Fig. 2a zwei Einzelmessungen zum Zeitpunkt t1 sowie t2 durchgeführt. Der Messzeitraum ΔT, also der zeitliche Abstand zwischen den beiden Einzelmessungen liegt beispielsweise im Bereich von Minuten oder auch im Stundenbereich, je nachdem welche Zeitdauer für den Wechsel der beiden Lastzustände zwischen den Lastzuständen L1 und L2 erforderlich ist. Die beiden Einzelmessungen definieren dabei eine erste Messreihe.

Mit zeitlichem Abstand von beispielsweise mehreren Minuten, Stunden, Tagen, Wochen, Monaten oder auch Jahren wird eine zweite Messreihe bei den gleichen Lastzuständen L also beim gleichen Lastwechsel durchgeführt. Bei dem hier dargestellten Lastwechsel zwischen zwei diskreten Lastzuständen L1, L2 handelt es sich beispielsweise um eine Laständerung beim Anfahren der Anlage vom kalten Zustand in einen betriebswarmen Zustand (und bei ansonsten gleichen Lastverhältnissen, wie beispielsweise Windlasten).

Fig. 2B zeigt eine Situation bei der alternativen Ausgestaltung, nachdem bereits ein Verschleiß des Lagers aufgetreten ist. Dies führt grundsätzlich dazu, dass die Differenz Δa' zwischen den nunmehr gemessenen Abstandswerten a1 ', a2 ' gegenüber dem in Fig. 2A gezeigten früheren Zustand, insbesondere Ausgangszustand zugenommen hat.

Die Veränderung der Differenz Δa (Veränderung des Abstandsdeltas) ist mit einer Veränderung des Lagerspiels korreliert. Das Lagerspiel wird daher bei der alternativen Ausgestaltung anhand dieses Abstandsdeltas Δa überwacht und ausgewertet. In Abhängigkeit der Veränderung des Abstandsdeltas werden dann geeignete Maßnahmen ergriffen und auf das Lagerspiel allgemein zurückgeschlossen.

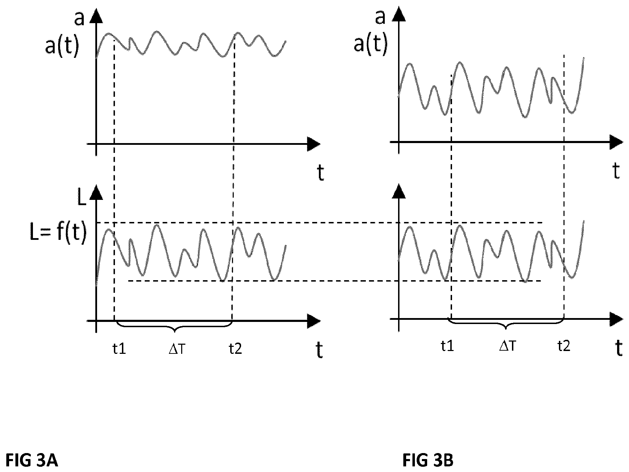

Betrachtet man bei einer Windkraftanlage die durch Windlasten hervorgerufenen Lastveränderungen, so handelt es sich hierbei - auch bei mittleren konstanten Windlasten beispielsweise über einen Zeitraum von mehreren Minuten - um variierende Lastverhältnisse, die typischerweise einer stochastischen Variation unterliegen. Diese Situation ist in den Figuren 3A, 3B dargestellt. Fig. 3A zeigt wiederum die Verhältnisse in einem Anfangszustand und die Fig. 3B die Verhältnisse nach einer gewissen Betriebsdauer und Verschleiß.

In der unteren Bildhälfte ist jeweils der Verlauf des Lastzustands dargestellt. In dem Messzeitraum ΔT werden nunmehr erfindungsgemäß eine Vielzahl von Einzelmessungen durchgeführt, so dass ein Verlauf der Abstände a über die Zeit ermittelt wird. Es wird daher durch die Vielzahl der Messungen quasi ein kontinuierlicher Verlauf der Abstandswerte ermittelt, die zu dem Verlauf der Variation der Lastzustände L variieren. Sowohl die Veränderung des Lastzustands L als auch die der Abstände a sind daher zeitabhängige Funktionen. Die erfassten Werte des Abstandes a werden einer statistischen Auswertung unterzogen, die zu einem statistischen Kennwert führen, welcher zumindest ein Maß für die Differenzen Δa der Abstände a bei der Vielzahl der Einzelmessungen ist. Als statistischer Kennwert wird eine Abweichung, nämlich eine Standardabweichung oder eine Varianz von dem Mittelwert für die Auswertung herangezogen.

Wie anhand der Darstellung in Fig. 3B zu erkennen ist, die die Situation nach einem Verschleiß zeigt, führt ein Verschleiß neben einer Veränderung des Mittelwerts auch zu einer deutlichen Zunahme der Abweichung bzw. Varianz vom Mittelwert. Dieser (statistische) Kennwert wird aus Auswertungsparameter für die Beurteilung von Änderungen im Lagerspiel herangezogen.

Bei der Durchführung der Abstandsmessungen werden lastabhängige Einflüsse auf das Abstandsdelta Δa aufgrund von Fertigungstoleranzen und Fertigungsabweichungen, wie Plan- und Rundlauffehler überlagert. Teilweise sind diese Fertigungsabweichungen größer als die lastbedingten Abstandsänderungen.

Ein wesentlicher Gesichtspunkt bei dem Verfahren ist daher in der Korrektur und Bereinigung der gemessenen Abstandswerte a um derartige fertigungsbedingte Abstandsvariationen zu sehen.

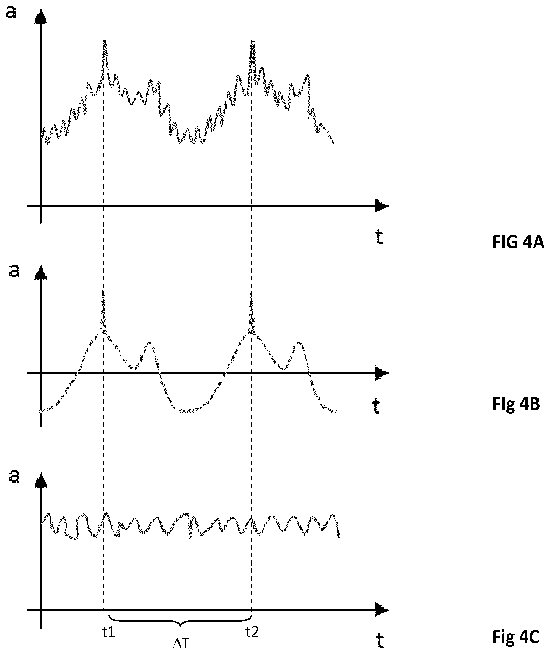

In der Fig. 4A ist zur Erläuterung beispielhaft ein Verlauf der Abstände a über die Zeit dargestellt, und zwar zwischen den Zeitpunkten t1, t2, die genau eine Periode, also eine volle Umdrehung des Rotors 12 um die Rotationsachse 16 definieren. Zu den Zeitpunkten t1, t2 sind jeweils deutliche Ausschläge nach oben zu erkennen. Diese sind bewusst durch entsprechende Markierungen in Form von Erhebungen oder Vertiefungen innerhalb der Messfläche hervorgerufen.

In der Fig. 4A ist ein Verlauf bei der Erfassung einer Vielzahl von Abständen für zumindest eine Periode dargestellt, wobei neben lastabhängigen Abstandsänderungen auch die fertigungsbedingten Abstandsänderungen überlagert sind.

In Fig. 4B ist als eine Referenzkurve der Verlauf der Abstände a in Folge von lediglich von Fertigungsabweichungen dargestellt. Diese Referenzmessung wird insbesondere in einem lastfreien Zustand durchgeführt.

Für die Auswertung des gemessenen Abstandsverlaufs gemäß der Fig. 4A zur Extraktion eines Abstandsverlaufs, der rein lastbedingt ist, wird der gemessene Abstandsverlauf (Fig. 4A) um den Abstandsverlauf gemäß der Referenzkurve (Fig. 4B) korrigiert. Speziell wird die Referenzkurve gemäß Fig. 4Bb von der gemessenen Kurve gemäß Fig. 4A abgezogen. Es wird dann ein rein lastbedingter Abstandsverlauf erhalten (korrigierter Verlauf), wie er beispielhaft in der Fig. 4C dargestellt ist. Dieser wird dann für die weitere Auswertung herangezogen. Das heißt im Rahmen einer zweiten Messreihe zu einem späteren Zeitpunkt wird wiederum ein korrigierter lastabhängiger Verlauf ermittelt und es werden wie zuvor beschrieben die beiden Abstandsverläufe in Hinblick auf die Veränderungen der Differenzen der Abstandswerte ausgewertet.

Grundsätzlich besteht die Möglich und Gefahr, dass sich im Laufe des Betriebs die zunächst montage- oder fertigungsbedingten Abweichungen wie Plan- und Rundlauffehler verändern. Dies kann beispielsweise durch Verschleiß oder Lösen von Vorspannelementen verursacht werden. Außerdem führt Setzen in Montagefugen(z.B. Lagersitz) zu einer Veränderung des Rund- und Planlaufs. Zweckdienlicherweise werden daher auch der Verlauf und die Entwicklung der fertigungsbedingten Abweichungen und Abstandsänderungen überwacht bzw. erfasst. Hierzu wird beispielsweise zu wiederholten Zeitpunkten nach einer gewissen Betriebsdauer - beispielsweise im Vorfeld einer zweiten Messreihe - eine neue Referenzmessung durchgeführt. Der innerhalb dieser neuen Referenzmessung ermittelte Referenzverlauf wird dann von dem in der zweiten Messreihe gemessenen Abstandsverlauf abgezogen, um den reinen lastbedingten Verlauf der Abstandswerte a zu erhalten. Die korrigierten Abstandsverläufe gemäß den beiden Messreihen werden dann - vergleichbar zu dem in den Fig. 3A, 3B, dargestellten Verfahren ausgewertet.

Zu den Fig. 2 und Fig. 3 ist noch anzumerken, dass das mittlere Niveau des Abstands a bei den beschriebenen Ausführungsbeispielen mit Verschleiß ansteigt (Fig. 2) bzw. abfällt (Fig. 3). Das Abstandsdelta Δa steigt jedoch in beiden Fällen jeweils an. Verschleiß führt immer zu einem größeren Abstandsdelta Δa.

### Bezugszeichenliste

- 2: Lagereinheit
- 4: Wälzlager
- 6: Innenring
- 8: Außenring
- 10: Wälzkörper
- 12: Rotor
- 14: Stator
- 16: Rotationsachse
- 18: Abstandssensor
- F_{R}: radiale Kraft
- F_{A}: axiale Kraft
- a_{R}: radialer Abstand
- a_{A}: axialer Abstand
- L: Lastzustand
- ΔT: Messzeitraum
- Δa: Abstandsdifferenz

## Patentansprüche

1. Verfahren zur Überwachung eines Lagerspiels eines Wälzlagers (4), insbesondere eines Lagerspiels eines Großlagers, speziell einer Windkraftanlage und insbesondere des Lagerspiels des Hauptlagers einer Windkraftanlage, **dadurch gekennzeichnet, dass**
- im Rahmen einer ersten Messreihe mit Hilfe zumindest eines Abstandssensors (18) jeweils ein Abstand (a, a₁, a₂) zwischen einem rotierenden Teil (12) und einem stehenden Teil (14) bei zumindest zwei sich wiederholenden, unterschiedlichen Lastzuständen erfasst wird, und eine Differenz (Δa) zwischen den gemessenen Abständen (a, a₁, a₂) vorliegt,
- zu einem späteren Zeitpunkt die Erfassung des Abstands (a, a₁, a₂) bei den zumindest zwei sich wiederholenden unterschiedlichen Lastzuständen im Rahmen einer zweiten Messreihe wiederholt wird,
- auf Basis der Änderungen der Differenz (Δa) zwischen den gemessenen Abständen (a, a₁, a₂) bei den beiden Messreihen auf Veränderungen im Lagerspiel geschlossen wird; wobei
- während einer jeweiligen Messreihe über einen vorgegebenen Messzeitraum (ΔT) eine Vielzahl von Messungen durchgeführt wird und ein Last-Zeitverhalten der Abstände (a) erfasst und im Hinblick auf die Differenzen (Δa) der Abstände (a) ausgewertet wird,
- wobei entweder
- eine Differenz aus Maximum und Minimum innerhalb einer Messreihe ermittelt und im Hinblick auf eine Veränderung des Lagerspiels ausgewertet wird oder
- eine statistische Auswertung des Last-Zeitverhaltens der Abstände (a) vorgenommen und ein statistischer Kennwert der gemessenen Abstände (a) als Maß für die Differenz (Δa) zwischen den gemessenen Abständen (a) herangezogen wird, nämlich eine Standardabweichung oder eine Varianz vom Mittelwert, und dieser Kennwert auf eine Änderung überwacht wird.

2. Verfahren nach dem vorhergehenden Anspruch, wobei ein durch stochastisch veränderliche Lasten hervorgerufenes, sich periodisch wiederholendes Last-Zeitverhalten der Abstände (a) erfasst und im Hinblick auf die Differenzen (Δa) der Abstände (a) ausgewertet wird.

3. Verfahren nach einem der vorhergehenden Ansprüche, wobei eine Referenzmessung über mindestens eine Umdrehung des Wälzlagers (4) vorgenommen wird oder hinterlegt ist, um Fertigungsabweichungen wie Plan- und Rundlauffehler zu erfassen und die Abweichungen bei den Messreihen herauszurechnen oder separat zu bewerten, wobei die Referenzmessung insbesondere bei konstantem Lastzustand ermittelt wird.

4. Verfahren nach dem vorhergehenden Anspruch, wobei die Referenzmessung und eine spätere Abstandsmessung positions- und zeitlich in Übereinstimmung gebracht werden.

5. Verfahren nach dem vorhergehenden Anspruch, wobei Mindestens eine Marke, wie beispielsweise eine Vertiefung oder Erhöhung auf einer Messfläche, gegen die der Abstandssensor misst, vorgesehen ist, um die Referenzmessung und die Messungen miteinander in Übereinstimmung zu bringen.

6. Verfahren nach einem der vorhergehenden Ansprüche, wobei um den Umfang insbesondere gleichverteilt mehrere Abstandssensoren (18) angeordnet sind, beispielsweise drei oder mehr, wobei vorzugsweise ein zeitgleicher Abstandswert, insbesondere Mittelwert der mehreren Abstandssensoren (18) sowie deren Abstandsänderung (Δa) erfasst wird.

7. Verfahren nach dem vorhergehenden Anspruch, wobei eine Phasenverschiebung der einzelnen Sensorsignale der mehreren verteilt angeordneten Abstandssensoren (18) für eine Bestimmung von Fertigungsabweichung vorgenommen wird, derart dass die Signale in Überdeckung gebracht werden.

8. Verfahren nach einem der beiden vorhergehenden Ansprüche, bei dem die von den Abstandssensoren (18) ermittelten Messwerte über mehrere Umdrehungen ausgewertet und gemittelt werden.

9. Verfahren nach einem der vorhergehenden Ansprüche, wobei ein Rund-und Planlaufverhalten über die Zeit überwacht wird.

10. Verfahren nach einem der Ansprüche 6bis 9, bei dem aus den gemessenen diskreten Abstandswerten (a) der Abstandssensoren (18) wiederholt ein Abstandsverlauf über eine Umdrehung nachgebildet wird und auf Änderungen überwacht wird.

11. Verfahren nach einem der Ansprüche 6 bis 10, wobei ein gleitender Mittelwert des Abstandsverlaufs ermittelt wird, wobei vorzugsweise als Bereich für die gleitende Mittelwertbildung eine mehrfache , Umdrehung herangezogen wird.

12. Verfahren nach einem der vorhergehenden Ansprüche, wobei zusätzliche Betriebsparameter, wie Leistung, Drehzahl, Last, Temperatur zur Identifizierung vergleichbarer Betriebszustände herangezogen werden, um Abstandsmesswerte gleicher Betriebszustände zu vergleichen und insbesondere zu klassifizieren.

13. Vorrichtung mit zumindest einem Abstandssensor (18) zur Messung eines Abstands (a, a₁, a₂) zwischen einem rotierenden Bauteil (12) und einem stehenden Bauteil (14) eines Wälzlagers (4) **gekennzeichnet dadurch, dass** die Vorrichtung eine Auswerteeinrichtung umfasst, die zur Durchführung des Verfahrens nach einem der vorhergehenden Ansprüche ausgebildet ist.

## Claims

1. Method for monitoring a bearing clearance of a roller bearing (4), in particular a bearing clearance of a large bearing, specifically of a wind turbine, and in particular of the bearing clearance of the main bearing of a wind turbine, **characterized in that**
- within the scope of a first measuring series using at least one distance sensor (18), a distance (a, a₁, a₂) between a rotating part (12) and a stationary part (14) is respectively sensed in at least two different recurring load states, and there is a difference (Δa) between the measured distances (a, a₁, a₂),
- at a later time the sensing of the distance (a, a₁, a₂) is repeated in the at least two different recurring load states within the scope of a second measuring series,
- changes in the bearing clearance are inferred on the basis of the changes in the difference (Δa) between the measured distances (a, a₁, a₂) in the two measuring series; wherein
- during a respective measuring series over a specified measuring time period (ΔT) a multiplicity of measurements is carried out, and a load time behaviour of the distances (a) is sensed and evaluated with respect to the differences (Δa) between the distances (a),
- wherein either
- a difference is determined from a maximum and a minimum within a measuring series and is evaluated with respect to a change in the bearing clearance or
- a statistical evaluation of the load time behaviour of the distances (a) is carried out and a statistical characteristic value of the measured distances (a) is used as a measure for the difference (Δa) between the measured distances (a), to be specific a standard deviation or a variance from the mean value, and this characteristic value is monitored for a change.

2. Method according to the preceding claim, wherein a periodically recurring load time behaviour of the distances (a), caused by stochastically variable loads, is sensed and evaluated with respect to the differences (Δa) between the distances (a).

3. Method according to one of the preceding claims, wherein a reference measurement is carried out over at least one revolution of the roller bearing (4) or is stored, in order to sense fabrication deviations such as axial run-out and concentricity errors and to eliminate the deviations from the measuring series by calculation or to evaluate them separately, wherein the reference measurement is determined, in particular, in a constant load state.

4. Method according to the preceding claim, wherein the reference measurement and a separate distance measurement are correlated in terms of position and time.

5. Method according to the preceding claim, wherein at least one mark, such as for example a depression or a raised portion on a measuring surface, against which mark the distance sensor measures, is provided in order to correlate the reference measurement and the measurements.

6. Method according to one of the preceding claims, wherein a plurality of distance sensors (18) are arranged, in particular distributed uniformly, around the circumference, for example three or more distance sensors (18), wherein preferably a simultaneous distance value, in particular a mean value of the plurality of distance sensors (18) and the change (Δa) in their distances is sensed.

7. Method according to the preceding claim, wherein a phase shift of the individual sensor signals with the plurality of distance sensors (18) which are arranged distributed is carried out in order to determine fabrication deviation in such a way that the signals are brought into congruence.

8. Method according to one of the two preceding claims, in which the measured values which are determined by the distance sensors (18) are evaluated and averaged over a plurality of revolutions.

9. Method according to one of the preceding claims, wherein a concentricity behaviour and axial run-out behaviour are monitored over time.

10. Method according to one of Claims 6 to 9, in which a distance profile is repeatedly modelled over one revolution from the measured discrete distance values (a) of the distance sensors (18) and is monitored for changes.

11. Method according to one of Claims 6 to 10, wherein a floating mean value of the distance profile is determined, wherein preferably a multiple revolution is used as a range for formation of the floating mean values.

12. Method according to one of the preceding claims, wherein additional operating parameters such as the power, rotational speed, load, temperature are used for identifying comparable operating states, in order to compare distance measured values of the same operating states and, in particular, classify them.

13. Device having at least one distance sensor (18) for measuring a distance (a, a₁, a₂) between a rotating component (12) and a stationary component (14) of a roller bearing (4), **characterized in that** the device comprises an evaluation apparatus which is designed to carry out the method according to one of the preceding claims.

## Revendications

1. Procédé de surveillance d'un jeu de palier d'un palier à roulement (4), notamment d'un jeu de palier d'un grand palier, plus particulièrement d'un aérogénérateur et notamment du jeu de palier du palier principal d'un aérogénérateur, **caractérisé en ce que**
- dans le cadre d'une première série de mesures, un écart (a, a₁, a₂) entre une partie rotative (12) et une partie fixe (14) avec au moins deux états de charge différents qui se répètent est respectivement détecté à l'aide d'au moins un capteur d'écart (18) et une différence (Δa) est présente entre les écarts (a, a₁, a₂) mesurés,
- la détection de l'écart (a, a₁, a₂) avec les au moins deux états de charge différents qui se répètent est répétée à un moment ultérieur dans le cadre d'une deuxième série de mesures,
- des modifications dans le jeu de palier sont déduites sur la base des modifications de la différence (Δa) entre les écarts (a, a₁, a₂) mesurés lors des deux séries de mesures ;
- une pluralité de mesures étant effectuées pendant une série de mesures respective sur une période de mesure (ΔT) prédéfinie et un comportement charge/temps des écarts (a) étant détecté et interprété du point de vue des différences (Δa) entre les écarts (a),
- et alors soit
- une différence entre le maximum et le minimum au sein d'une série de mesures étant déterminée et interprétée du point de vue d'une modification du jeu du roulement, soit
- une interprétation statistique du comportement charge/temps des écarts (a) étant effectuée et une valeur caractéristique statistique des écarts (a) étant utilisée comme mesure de la différence (Δa) entre les écarts (a) mesurés, à savoir un écart-type ou une variance de la valeur moyenne, et cette valeur caractéristique étant surveillée en vue d'une modification.

2. Procédé selon la revendication précédente, un comportement charge/temps des écarts (a) qui se répète périodiquement, provoqué par des charges variables de manière stochastique, étant détecté et interprété du point de vue des différences (Δa) entre les écarts (a).

3. Procédé selon l'une des revendications précédentes, une mesure de référence étant effectuée ou étant enregistrée sur au moins un tour du palier à roulement (4) afin de détecter des écarts de fabrication tels que des défauts de planéité et des faux-ronds et calculer ou évaluer séparément les écarts lors des séries de mesures, la mesure de référence étant notamment déterminée avec un état de charge constant.

4. Procédé selon la revendication précédente, la mesure de référence et une mesure d'écart ultérieure étant amenées en concordance de position et temporelle.

5. Procédé selon la revendication précédente, au moins un repère, par exemple une empreinte ou un bossage, étant présent sur une surface de mesure par rapport à laquelle le capteur d'écart effectue la mesure afin d'amener la mesure de référence et les mesures en concordance mutuelle.

6. Procédé selon l'une des revendications précédentes, plusieurs capteurs d'écart (18) étant disposés sur le pourtour, notamment distribués uniformément, par exemple trois ou plus, une valeur d'écart isochrone, notamment une valeur moyenne des plusieurs capteurs d'écart (18) ainsi que de leur changement d'écart (Δa) étant de préférence acquise.

7. Procédé selon la revendication précédente, un déphasage des signaux de capteur individuels des plusieurs capteurs d'écart (18) disposés distribués étant effectué pour une définition de l'écart de fabrication, de telle sorte que les signaux sont amenés en coïncidence.

8. Procédé selon l'une des deux revendications précédentes, dans lequel les valeurs mesurées déterminées par les capteurs d'écart (18) sont interprétées et leur moyenne est calculée sur plusieurs tours.

9. Procédé selon l'une des revendications précédentes, un comportement de rotation et de planéité en fonction du temps étant surveillé.

10. Procédé selon l'une des revendications 6 à 9, dans lequel une courbe d'écart sur un tour étant simulée de manière répétitive à partir des valeurs d'écart (a) discrètes mesurées des capteurs d'écart (18) et surveillée en vue de variations.

11. Procédé selon l'une des revendications 6 à 10, une valeur moyenne glissante de la courbe d'écart étant déterminée, un tour multiple étant de préférence utilisé comme plage pour le calcul de la valeur moyenne glissante.

12. Procédé selon l'une des revendications précédentes, des paramètres de fonctionnement supplémentaires comme la puissance, la vitesse de rotation, la charge, la température étant utilisés pour l'identification d'états opérationnels comparables afin de comparer et notamment de classifier les valeurs mesurées de l'écart d'états opérationnels identiques.

13. Arrangement comprenant au moins un capteur d'écart (18) destiné à mesurer un écart (a, a₁, a₂) entre un élément structural en rotation (12) et un élément structural fixe (14) d'un palier à roulement (4), **caractérisé en ce que** l'arrangement comprend un dispositif d'interprétation qui est configuré pour mettre en œuvre le procédé selon l'une des revendications précédentes.
